# EUROPÄISCHE PATENTANMELDUNG

(11) **EP 2 456 194 A2**
(43) Veröffentlichungstag der Anmeldung: **23.05.2012**
(21) Anmeldenummer: 11009092.5
(22) Anmeldetag: 16.11.2011
(51) Int. Cl.: H04N 5/355, H04N 5/378

(54) **Bildsensor**

(30) Priorität: 19.11.2010 DE 102010051986
(71) Anmelder: Arnold&Richter Cine Technik GmbH&Co. Betriebs KG, 80799 München (DE)
(72) Erfinder: Cieslinski, Michael, 85521 Ottobrunn (DE)
(74) Vertreter: Manitz, Finsterwald & Partner GbR

(57) **Zusammenfassung**

Die Erfindung betrifft einen Bildsensor, insbesondere einen CMOS-Bildsensor, für elektronische Kameras, mit einer Vielzahl von in Zeilen und Spalten angeordneten lichtempfindlichen Pixeln zur Erzeugung von belichtungsproportionalen Signalen, wobei die Pixel einer jeweiligen Spalte über wenigstens eine jeweilige Spaltenleitung mit wenigstens einer jeweiligen Spaltenausleseschaltung gekoppelt sind, und wobei die jeweilige Spaltenausleseschaltung wenigstens zwei parallel geschaltete Spaltenverstärker umfasst, und mit einer Steuereinrichtung zum Steuern des Auslesens eines Bilds, wobei ein Auslesevorgang für das jeweilige Pixel wenigstens einen Auslesetakt umfasst. Der Verstärkungsfaktor wenigstens eines der beiden Spaltenverstärker der jeweiligen Spaltenausleseschaltung ist verstellbar. Der Bildsensor umfasst eine erste Betriebsart und eine zweite Betriebsart, wobei in der ersten Betriebsart für einen jeweiligen Auslesetakt die beiden Spaltenverstärker unterschiedliche Verstärkungsfaktoren aufweisen und das Signal eines Pixels einer Zeile mit den zwei unterschiedlichen Verstärkungsfaktoren verstärkt wird, und wobei in der zweiten Betriebsart für einen jeweiligen Auslesetakt die beiden Spaltenverstärker denselben Verstärkungsfaktor aufweisen und die Signale zweier Pixel zweier unterschiedlicher Zeilen mit demselben Verstärkungsfaktor verstärkt werden.

## Beschreibung

Die vorliegende Anmeldung betrifft einen Bildsensor, insbesondere einen CMOS-Bildsensor, für elektronische Kameras, mit einer Vielzahl von in Zeilen und Spalten angeordneten lichtempfindlichen Pixeln zur Erzeugung von belichtungsproportionalen Signalen, wobei die Pixel einer jeweiligen Spalte über wenigstens eine jeweilige Spaltenleitung mit wenigstens einer jeweiligen Spalteausleseschaltung gekoppelt sind, und wobei die jeweilige Spaltenausleseschaltung wenigstens zwei parallel geschaltete Spaltenverstärker umfasst, und mit einer Steuereinrichtung zum Steuern des Auslesens eines Bilds, wobei ein Auslesevorgang für ein jeweiliges Pixel wenigstens einen Auslesetakt umfasst.

Eine elektronische Kamera kann beispielsweise dazu verwendet werden, Bildsequenzen digital aufzuzeichnen, die später in einem Kino vorgeführt werden. Dabei ist es vorteilhaft, wenn die Kamera eine hohe Lichtempfindlichkeit und zugleich einen hohen Dynamikumfang aufweist. Diese beiden Eigenschaften erhöhen die Qualität der Aufzeichnung, und sie helfen beispielsweise, die Kosten für die Beleuchtung der Szene zu reduzieren.

Bei elektronischen Kameras wandeln die lichtempfindlichen Elemente bzw. Pixel durch ein Objektiv der Kamera fallendes Licht in elektrische Signale um. Zum Auslesen eines Bildes wird jedes der Pixel adressiert, wobei ein Pixel einem Bildpunkt des Bildes entspricht. Die in Zeilen und Spalten angeordneten Pixel bilden ein Bildfeld des Bildsensors. Ein Signal, das zu einer durch eine Belichtung gesammelten Ladung des Pixels proportional ist, wird zu einem Datenausgang des Bildsensors geleitet.

Insbesondere sind Bildsensoren bekannt, die für jede Zeile eine eigene Zeilenauswahlleitung und für jede Spalte eine eigene Spaltenleitung aufweisen. Das Auslesen eines solchen Bildsensors erfolgt zeilenweise, d.h. Zeile für Zeile. Hierzu werden mittels der jeweiligen Zeilenauswahlleitung die Pixel der jeweiligen Zeile auf die Spaltenleitungen geschaltet. Üblicherweise ist jeder der Spaltenleitungen ein eigener Spaltenverstärker zugeordnet. Es können aber auch mehreren Spaltenleitungen jeweils ein einziger Spaltenverstärker zugeordnet sein. Die Spaltenverstärker sind dazu vorgesehen, die an den Spaltenleitungen anliegenden Signale der Pixel der ausgewählten Zeile zu verstärken. Die verstärkten Signale werden dann ausgetaktet, d.h. von den Spaltenverstärkern an den Datenausgang oder, falls mehrere Datenausgänge vorgesehen sind, wie es zur Erreichung einer höheren Bildwiederholrate bzw. Bildwiederholfrequenz in der Regel der Fall ist, an die Datenausgänge des Bildsensors übergeben.

Dabei wird auch bei einer Vielzahl von Datenausgängen in der Regel nicht für jede Spaltenleitung und/oder für jeden Spaltenverstärker ein eigener Datenausgang zur Verfügung gestellt, da mit jedem Datenausgang ein erheblicher Platzbedarf und damit Kostenaufwand verbunden ist. Zwischen Spaltenverstärkern und Datenausgängen ist deshalb in der Regel eine Multiplexeinrichtung vorgesehen. Beispielsweise können für einen Bildsensor mit 2880 x 2160 Pixel 32 Datenausgänge (pro Kanal) vorgesehen sein. Die Anzahl der Datenausgänge ist in der Regel also geringer als die Anzahl der Spaltenleitungen.

Zur Erhöhung des Dynamikumfangs des Bildsensors kann nun vorgesehen sein, dass die Signale der Pixel durch zwei oder mehr voneinander getrennte Kanäle ausgelesen werden, die die Signale unterschiedlich stark verstärken, wobei jeder Kanal einen eigenen Spaltenverstärker aufweist, und wobei die Verstärkungsfaktoren der Spaltenverstärker der Kanäle voneinander unterschiedlich sind. In einem solchen Fall kann der Bildsensor z.B. 2 x 32 Datenausgänge umfassen, wobei dem jeweiligen Datenausgang des zweiten Kanals dieselben Spaltenleitungen und/oder Spaltenverstärker zugeordnet sind wie dem zugehörigen Datenausgang des ersten Kanals.

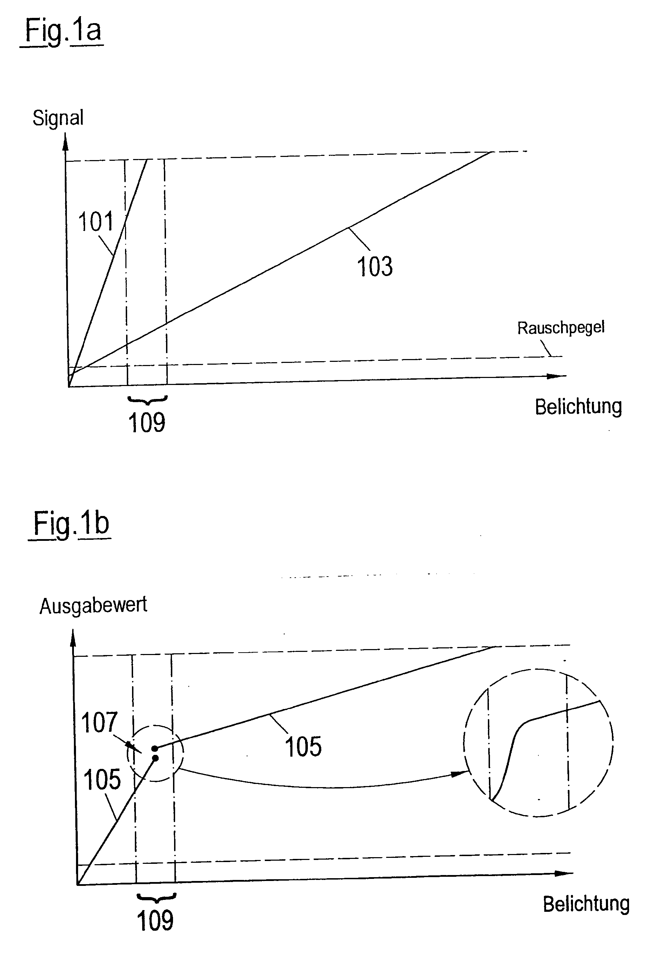

Die beiden Kanäle können dann unabhängig voneinander ausgelesen und kombiniert werden, wobei insgesamt ein Bild mit einem höheren Dynamikumfang entsteht. Dies ist in den Fig. 1a und 1b gezeigt. Die Kombination der verstärkten Signale zweier Kanäle, von denen ein Kanal 101 eine hohe Verstärkung und ein Kanal 103 eine geringe Verstärkung besitzt, erfolgt derart, dass bei geringer Belichtung das verstärkte Signal des Kanals 101 mit der hohen Verstärkung und bei hoher Belichtung das verstärkte Signal des Kanals 103 mit der geringen Verstärkung einem Ausgabewert 105 für den den beiden Kanälen 101, 103 zugeordneten jeweiligen Bildpunkt zugrunde gelegt wird.

Am Übergang zwischen geringer und hoher Belichtung ist ein einfaches Umschalten zwischen den beiden Kanälen 101, 103 in der Regel nicht ausreichend, da aufgrund des herstellungsbedingt meist nicht vermeidbaren Auftretens von Offsetspannungen und/oder Abweichungen von den gewünschten Verstärkungen an dem Übergang ein Sprung 107 in der Belichtungs-Ausgabewert-Kennlinie auftreten würde, wie es in Fig. 1b gezeigt ist. Üblicherweise erfolgt daher in einem Übergangsbereich 109 um den Übergang herum ein Überblenden, durch das sowohl das verstärkte Signal des Kanals 101 als auch das verstärkte Signal des Kanals 103 berücksichtigt wird, wobei die beiden Signale derart miteinander verrechnet werden, dass ein sanfter Übergang entsteht, wie er in der vergrößerten Darstellung des Übergangs in Fig. 1b gezeigt ist.

In dem vorgenannten Beispiel mit 2880 x 2160 Pixeln und 2 x 32 Datenausgängen werden 90 Auslesetakte benötigt, um die Signale der Pixel einer Zeile 2-kanalig auszutakten, vorausgesetzt, dass der Auslesevorgang für das jeweilige Pixel genau einen Auslesetakt umfasst. Das Auslesen einer Zeile benötigt bei einer Auslesetaktfrequenz von 50 MHz daher 1,8 µs. Für das Auslesen eines ganzen Bildes, d.h. von 2160 Zeilen, sind daher 3,888 ms erforderlich. Damit ist eine maximale Bildwiederholrate bzw. -frequenz von 257 Hz möglich.

Eine Erhöhung der Bildwiederholfrequenz kann grundsätzlich dadurch erreicht werden, dass die Auslesetaktfrequenz und/oder die Anzahl der Datenausgänge pro Kanal erhöht wird. Eine Erhöhung der Auslesetaktfrequenz ist in der Regel jedoch nur möglich, wenn die jeweils nächste Technologiegeneration verwendet wird. Eine Erhöhung der Anzahl der Datenausgänge pro Kanal ist sehr kostenintensiv.

Der Erfindung liegt die Aufgabe zugrunde, einen Bildsensor der eingangs genannten Art anzugeben, der eine kostengünstige Erhöhung der Bildwiederholrate und/oder des Dynamikumfangs ermöglicht.

Diese Aufgabe wird durch einen Bildsensor mit den Merkmalen des Anspruchs 1 gelöst, und insbesondere dadurch, dass der Verstärkungsfaktor wenigstens eines der beiden Spaltenverstärker der jeweiligen Spaltenausleseschaltung verstellbar ist, und dass der Bildsensor eine erste Betriebsart und eine zweite Betriebsart umfasst, wobei in der ersten Betriebsart für einen jeweiligen Auslesetakt die beiden Spaltenverstärker unterschiedliche Verstärkungsfaktoren aufweisen und das Signal eines Pixels einer Zeile mit den zwei unterschiedlichen Verstärkungsfaktoren verstärkt wird, und wobei in der zweiten Betriebsart für einen jeweiligen Auslesetakt die beiden Spaltenverstärker denselben Verstärkungsfaktor aufweisen und die Signale zweier Pixel zweier unterschiedlicher Zeilen mit demselben Verstärkungsfaktor verstärkt werden.

Erfindungsgemäß ist der Bildsensor, insbesondere die Steuereinrichtung, dazu ausgelegt, zwischen der ersten Betriebsart, in der die Pixel des Bildsensors 2-kanalig ausgelesen werden, und der zweiten Betriebsart, in der die Pixel des Bildsensors 1-kanalig ausgelesen werden, umzuschalten.

Bei einem Bildsensor mit 2880 x 2160 Pixeln und 2 x 32 Datenausgängen sind in der zweiten Betriebsart lediglich 45 Auslesetakte erforderlich, um ein vollständiges Bild auszulesen. Bei einer Auslesetaktfrequenz von 50 MHz kann ein vollständiges Bild damit in lediglich 1,944 ms (0,9 µs x 2160) ausgelesen werden. In der zweiten Betriebsart kann damit eine Bildwiederholrate von 514 Hz erreicht werden. Auf die durch das 2-kanalige Auslesen gewonnene erhöhte Dynamik wird bei einem derartigen 1-kanaligen Auslesen verzichtet. Für Zeitlupenaufnahmen, bei denen ein solches 1-kanaliges Auslesen zum Einsatz kommen kann, ist dies in der Regel jedoch nicht von Nachteil, da bei derartigen Aufnahmen die Szene typischerweise ohnehin beleuchtet wird und die im Bild auftretenden Kontraste durch die Beleuchtung reduziert werden.

Bei einem Auslesetakt handelt es sich um einen Takt eines periodischen, eine Auslesetaktfrequenz aufweisenden Taktsignals, in dem das an einem Spaltenverstärker anliegende Signal eines Pixels an eine dem Spaltenverstärker nachgeordnete Einheit, insbesondere einen Datenausgang, übergeben wird. Innerhalb eines Auslesetakts können mehrere Ausleseschritte vorgesehen sein, die in dem jeweiligen Pixel oder in der jeweiligen Spaltenausleseschaltung durchgeführt werden, beispielsweise um in dem jeweiligen Pixel mehrere Ladungstransfers durchzuführen oder um die in dem Pixel erzeugte Ladung in mehreren Portionen zu dem Spaltenverstärker oder zugeordneten Signalspeichern zu übertragen.

Nach einer Ausbildung der Erfindung umfasst der Bildsensor wenigstens zwei der folgenden Betriebsmodi: einen Normalmodus, in dem der Bildsensor ausschließlich in der ersten Betriebsart betrieben wird, einen Hochgeschwindigkeitsmodus, in dem der Bildsensor ausschließlich in der zweiten Betriebsart betrieben wird, und einen Hochdynamikmodus, in dem der Bildsensor zunächst in der zweiten Betriebsart und anschließend in der ersten Betriebsart betrieben wird. In dem Normalmodus wird also mit normaler Geschwindigkeit und 2-kanalig ausgelesen. In dem Hochgeschwindigkeitsmodus erfolgt ein schnelles 1-kanaliges Auslesen. Der Hochdynamikmodus kombiniert die beiden Betriebsarten und erlaubt durch ein insbesondere mehrfaches, insbesondere partielles schnelles 1-kanaliges Zwischenauslesen gegenüber einem Betrieb im Normalmodus eine Erhöhung des Dynamikumfangs des Bildsensors, wie an anderer Stelle noch näher erläutert ist.

Bevorzugt umfasst der Auslesevorgang in dem Normalmodus und/oder dem Hochgeschwindigkeitsmodus einen einzigen Auslesetakt, und/oder in dem Hochdynamikmodus mehrere Auslesetakte.

Weiter bevorzugt umfasst der Hochdynamikmodus wenigstens zwei Auslesetakte in der zweiten Betriebsart, insbesondere für ein schnelles Zwischenauslesen, und/oder lediglich einen Auslesetakt in der ersten Betriebsart, insbesondere für ein abschließendes normales Auslesen. Insbesondere ermöglicht in dem Hochdynamikmodus lediglich ein letzter Auslesetakt, in dem bevorzugt der Bildsensor in der ersten Betriebsart betrieben wird, ein vollständiges Auslesen der in dem Pixel vorhandenen Ladung, wobei bevorzugt der letzte Auslesetakt lediglich einen Ausleseschritt umfasst.

Bevorzugt ist in der ersten Betriebsart der Verstärkungsfaktor des ersten der beiden Spaltenverstärker größer als der Verstärkungsfaktor des zweiten der beiden Spaltenverstärker. Insbesondere kann der Verstärkungsfaktor des zweiten der beiden Spaltenverstärker in der ersten Betriebsart dem Verstärkungsfaktor der beiden Spaltenverstärker in der zweiten Betriebsart entsprechen.

Nach einer anderen Ausbildung der Erfindung umfasst die Spaltenausleseschaltung mehrere Signalspeicher für Belichtungssignale, wobei dem ersten der beiden Spaltenverstärker wenigstens ein Signalspeicher für Belichtungssignale, insbesondere wenigstens zwei Signalspeicher für Belichtungssignale, und dem zweiten der beiden Spaltenverstärker wenigstens zwei Signalspeicher für Belichtungssignale, insbesondere wenigstens vier Signalspeicher für Belichtungssignale, vorgeschaltet sind, wobei bevorzugt die wenigstens zwei oder wenigstens vier Signalspeicher für Belichtungssignale parallel zueinander geschaltet sind.

Bevorzugt entspricht die Kapazität des bzw. die Summe der Kapazitäten der dem ersten Spaltenverstärker vorgeschalteten Signalspeicher für Belichtungssignale der Summe der Kapazitäten der dem zweiten Spaltenverstärker vorgeschalteten Signalspeicher für Belichtungssignale. Vorzugsweise weisen die dem ersten Spaltenverstärker zugeordneten Signalspeicher für Belichtungssignale jeweils dieselbe Kapazität und/oder die dem zweiten Spaltenverstärker zugeordneten Signalspeicher für Belichtungssignale jeweils dieselbe Kapazität auf.

Den beiden Spaltenverstärkern kann wenigstens ein Signalspeicher für ein Referenzsignal, insbesondere jedem der beiden Spaltenverstärker ein eigener Referenzsignalspeicher, vorgeschaltet sein, wobei bevorzugt die Kapazität des jeweiligen Referenzsignalspeichers der Summe der Kapazitäten der dem ersten Spaltenverstärker vorgeschalteten Signalspeicher für Belichtungssignale bzw. der Summe der Kapazitäten der dem zweiten Spaltenverstärker vorgeschalteten Signalspeicher für Belichtungssignale entspricht. Hierdurch wird eine korrelierte Doppelabtastung (correlated double sampling) ermöglicht, um das thermische Rauschen des Bildsensors zu unterdrücken.

Bevorzugt umfasst die Spaltenausleseschaltung erste Schaltermittel, um die jeweilige Spaltenleitung wahlweise mit einem oder mehreren der Signalspeicher zu verbinden. Vorzugsweise umfasst die Spaltenausleseschaltung zweite Schaltermittel, um die dem ersten Spaltenverstärker und/oder dem zweiten Spaltenverstärker zugeordneten Signalspeicher für Belichtungssignale jeweils gemeinsam mit dem zugeordneten Spaltenverstärker zu verbinden.

Insbesondere umfasst das jeweilige Pixel ein lichtempfindliches Detektorelement (z.B. eine Pinned-Diode), um aus einfallendem Licht elektrische Ladung zu erzeugen, einen Ausleseknoten, ein Transfer-Gate, an das ein Transfer-Steuerpuls anlegbar ist, um einen Ladungstransfer von dem Detektorelement zu dem Ausleseknoten zu ermöglichen, eine WandlerSchaltung (z.B. einen Wandler-FET), um ein Messsignal zu erzeugen, das einer in dem Ausleseknoten vorhandenen Ladung proportional ist, und eine Rücksetzeinrichtung, um eine in dem Ausleseknoten vorhandene Ladung auf einen Referenzwert rückzusetzen, wobei die Steuereinrichtung zum Steuern des Transfer-Gates und der Rücksetzeinrichtung des jeweiligen Pixels ausgelegt ist.

Um bei einem Bildsensor mit derartigen Pixeln eine hohe Lichtempfindlichkeit zu gewährleisten, ist es nötig, dass die durch das einfallende Licht in dem Detektorelement erzeugten Ladungen an dem Gate des Wandler-FET (Feld-Effekt-Transistor) eine hohe Spannung bewirken. Dies wird dadurch erreicht, dass die Kapazität des Ausleseknotens klein gehalten wird. Bei einer Kapazität von beispielsweise 2 fF bewirkt jedes Elektron eine Spannungsänderung von 80 µV. Besitzt die Kamera ein thermisches Rauschen von z.B. 240 µV, sind damit bereits 3 Elektronen bzw. 3 Photonen detektierbar. Dies entspricht der Rauschgrenze des jeweiligen Pixels. Ein derartiger Bildsensor besitzt damit zwar eine hohe Lichtempfindlichkeit, jedoch nur einen geringen Dynamikumfang. Bei der vorstehend genannten Kapazität von 2 fF ist der Ausleseknoten bereits mit ca. 12.000 Elektronen vollständig gefüllt. 12.000 Elektronen bewirken eine Spannung von etwa 1 V, wodurch die Grenze des elektrischen Bereichs erreicht ist, der an die Ausgänge weitergeleitet werden kann. Unter Berücksichtigung der Rauschgrenze (3 Elektronen) ergibt sich eine maximal erreichbare Dynamik von 4.000:1. Ein fotographischer Film hingegen besitzt eine Dynamik von weit über 10.000:1.

Insbesondere deshalb ist es bevorzugt, wenn die Steuereinrichtung dazu ausgelegt ist, die für den jeweiligen Auslesetakt in dem Pixel erzeugte Ladung in mehreren Ausleseschritten und damit mehreren Portionen von dem Pixel auszulesen, um den einzelnen Ladungsportionen proportionale Teilwert-Messsignale in den dem ersten oder dem zweiten Spaltenverstärker vorgeschalteten Signalspeichern getrennt voneinander zu speichern. Durch das schrittweise Auslesen kann die Dynamik des Bildsensors gegenüber der mit einem einschrittigen Auslesen verbundenen Dynamik um einen Faktor erhöht werden, der der Anzahl der Ausleseschritte bzw. vorgenannten Ladungstransfers entspricht. Wird die in dem vorgenannten Detektorelement erzeugte Ladung beispielsweise basierend auf vier Ausleseschritte bzw. Ladungstransfers ausgelesen, kann die Dynamik um den Faktor vier erhöht werden. Weist der vorgenannte Ausleseknoten beispielsweise eine Sättigungsgrenze von 12.000 Elektronen und das Detektorelement eine Sättigungsgrenze von 48.000 Elektronen auf, so wird bei einem Rauschpegel von drei Elektronen eine Dynamik von 16.000:1 erreicht. Wenn das Detektorelement eine noch höhere Sättigungsgrenze besitzt, kann die Dynamik durch ein mehr als vierfach unterteiltes Auslesen noch weiter erhöht werden. Da hierzu die Kapazität des Ausleseknotens nicht verändert werden muss, bleibt eine hohe Lichtempfindlichkeit erhalten. Grundsätzlich kann auch nur in zwei oder drei Schritten ausgelesen werden.

Bevorzugt umfasst in einem Normalmodus der Auslesevorgang einen einzigen Auslesetakt und die Steuereinrichtung ist dazu ausgelegt, die den einzelnen Ladungsportionen proportionalen Teilwert-Messsignale in den dem zweiten Spaltenverstärker vorgeschalteten Signalspeichern getrennt voneinander zu speichern, und das dem letzten Ausleseschritt zugehörige Teilwert-Messsignal zusätzlich in dem oder den dem ersten Spaltenverstärker vorgeschalteten einen oder wenigstens zwei Signalspeichern zu speichern.

Vorzugsweise erfolgen in einem Hochdynamikmodus lediglich in der zweiten Betriebsart mehrere Ausleseschritte.

Insbesondere ermöglicht in einem Normalmodus und/oder einem Hochgeschwindigkeitsmodus lediglich der letzte Ausleseschritt ein vollständiges Auslesen der in dem Pixel vorhandenen Ladung.

Vorzugsweise entspricht die Anzahl der dem zweiten Spaltenverstärker vorgeschalteten Signalspeicher für Belichtungssignale der Anzahl der Ausleseschritte.

Nach einer anderen Ausbildung der Erfindung umfasst in einem Hochdynamikmodus der Auslesevorgang mehrere Auslesetakte, wobei der oder die vor dem letzten Auslesetakt liegenden Auslesetakte während des Belichtungsvorgangs für das Bild erfolgen, und wobei die Steuereinrichtung dazu ausgelegt ist, die für den jeweiligen Auslesetakt in dem Pixel erzeugte Ladung, ggf. in mehreren Ausleseschritten und damit mehreren Portionen, von dem Pixel auszulesen, um ein der Ladung proportionales Messsignal in dem oder den dem ersten Spaltenverstärker vorgeschalteten einen oder wenigstens zwei Signalspeichern für Belichtungssignale oder in den dem zweiten Spaltenverstärker vorgeschalteten Signalspeichern für Belichtungssignale zu speichern.

Insbesondere ist also vorgesehen, das vorgenannte Detektorelement nicht nur einmal und am Ende des Belichtungsvorgangs auszulesen, sondern zusätzlich bereits zuvor, während des noch laufenden Belichtungsvorgangs. Für einen einzigen Belichtungsvorgang sind mehrere Auslesetakte vorgesehen, wobei für jeden Auslesetakt das vorgenannte Transfer-Gate zunächst geschlossen ist (während Ladung im vorgenannten Detektorelement erzeugt wird) und durch einen kurzzeitigen Transfer-Steuerpuls das Transfer-Gate temporär geöffnet wird, um einen Transfer einer Ladung zu dem vorgenannten Ausleseknoten zu ermöglichen. Anhand der somit zu dem Ausleseknoten übertragenen Ladung wird für jeden Auslesetakt ein Ausleseergebnis erzeugt (z.B. durch Schalten eines der jeweiligen Ladung in dem Ausleseknoten entsprechenden Spannungssignals auf die vorgenannte Spaltenleitung, Speichern des Spannungssignals in einem Kondensator, Verstärken des Spannungssignals und Übergeben des verstärkten Spannungssignals an einen Datenausgang). Zwischen zwei aufeinander folgenden Transfer-Steuerpulsen wird die vorgenannte Rücksetzeinrichtung kurzzeitig aktiviert, d.h. nach dem Erzeugen eines Ausleseergebnisses oder vor dem Anlegen des nächsten Transfer-Steuerpulses. Da in dem jeweiligen Pixel mit einem vor dem letzten Auslesetakt erfolgenden Auslesetakt Ladung gelöscht und damit wieder "Platz" für weitere Ladungsträger geschaffen werden kann, kann die von dem jeweiligen Pixel während eines einzigen Belichtungsvorgangs insgesamt auslesbare Ladungsmenge deutlich erhöht werden. Insbesondere können die Ausleseergebnisse der einzelnen Auslesetakte miteinander verrechnet, beispielsweise addiert werden, ggf. mit unterschiedlichen Gewichtungen, um einen Auslesewert für die während des Belichtungsvorgangs in dem jeweiligen Pixel erzeugte Ladung zu bestimmen. Hierdurch erhöht sich die Sättigungsgrenze und damit die maximale Aussteuerbarkeit bzw. maximal mögliche Belichtung des jeweiligen Pixels.

Vorzugsweise wird das Transfer-Gate während der Zwischenausleseschritte nicht vollständig geöffnet. Dadurch wird keine Ladung ausgelesen, wenn das Pixel nur einen Bruchteil, beispielsweise weniger als 10 % der maximalen Ladung enthält. Somit wird bei geringer Belichtung das Rauschen nicht erhöht, da letztlich nur ein einziges Ausleseergebnis - nämlich das letzte Ausleseergebnis des betreffenden Belichtungsvorgangs - verwendet wird.

Bevorzugt ist die Anzahl der Auslesetakte ungeradzahlig und/oder wenigstens ein Paar oder ein jeweiliges Paar von vor dem letzten Auslesetakt liegenden Auslesetakten symmetrisch um den Zeitmittelpunkt des jeweiligen Belichtungsvorgangs verteilt.

Vorzugsweise ist die Steuereinrichtung dazu ausgelegt, einen an das Pixel angelegten Steuerpuls zu variieren, um wahlweise ein teilweises oder vollständiges Auslesen der in dem Pixel vorhandenen Ladung zu ermöglichen.

Insbesondere ist die Steuereinrichtung dazu ausgelegt, in der zweiten Betriebsart zwei Bilder zeitlich überlappend und/oder die Signale der Pixel zweier unterschiedlicher Zeilen verschiedener Bilder auszutakten.

Darüber hinaus kann vorgesehen sein, dass die zwei unterschiedlichen, in der zweiten Betriebsart dem mit einem jeweiligen Auslesetakt zu verstärkenden beiden Pixeln zugeordneten Zeilen nicht unmittelbar aufeinander folgen und/oder einen konstanten Zeilenabstand voneinander aufweisen.

Die Erfindung betrifft weiterhin ein entsprechendes Verfahren zum Auslesen eines Bildsensors, insbesondere eines CMOS-Bildsensors, für elektronische Kameras. Bevorzugte Ausführungsformen des erfindungsgemäßen Verfahrens ergeben sich in analoger Weise aus den bevorzugten Ausgestaltungen des erfindungsgemäßen Bildsensors.

Nicht beschränkende Ausführungsbeispiele der Erfindung sind in der Zeichnung dargestellt und werden nachfolgend beschrieben. Es zeigen, jeweils in schematischer Darstellung,
- Fig. 1: Belichtungs-Signal-Kennlinien eines Bildsensors mit zwei Kanälen mit unterschiedlichen Verstärkungen,
- Fig. 2: einen 4-Transistor CMOS-Bildsensor, wobei von dem Bildsensor lediglich ein Pixel mit einem Detektorelement und eine dem Pixel zugeordnete Spaltenausleseschaltung dargestellt ist,
- Fig. 3: ein Zeitablaufdiagramm des Auslesevorgangs des Bildsensors in einem Normalmodus,
- Fig. 4: ein Zeitablaufdiagramm des Auslesevorgangs des Bildsensors in einem Hochgeschwindigkeitsmodus (schnelles Auslesen),
- Fig. 5: ein Zeitablaufdiagramm des Auslesevorgangs des Bildsensors in einem Hochdynamikmodus (mit schnellem partiellem Zwischenauslesen), und
- Fig. 6: den zeitlichen Verlauf der in dem Detektorelement aus Fig. 2 vorhandenen Ladung während eines einzigen Belichtungsvorgangs, bei verschiedenen Belichtungsstärken.

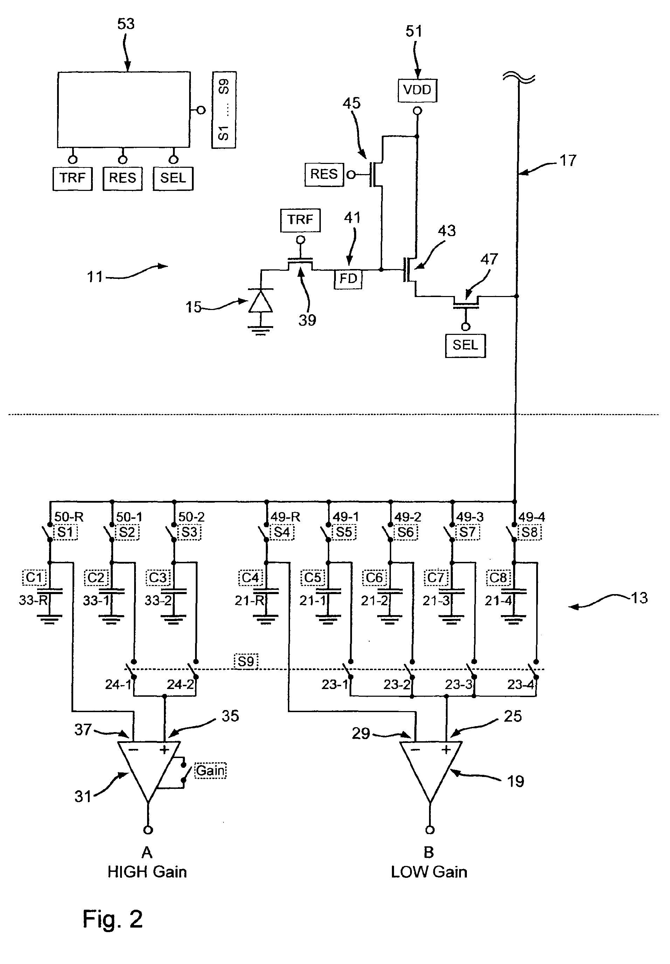

Der in Fig. 2 dargestellte erfindungsgemäße Bildsensor umfasst 2880 x 2160 Pixel, von denen stellvertretend lediglich ein einziges Pixel 11 dargestellt ist. Der Bildsensor umfasst ferner 2 x 32 Datenausgänge und wird mit einer vorgegebenen Auslesetaktfrequenz von 50 MHz betrieben.

Das in Fig. 2 gezeigte Pixel 11 umfasst ein lichtempfindliches Detektorelement in Form einer sogenannten Pinned-Diode (PD) 15, die über ein Transfer-Gate 39 mit einem Ausleseknoten 41, der als eine sogenannte Floating Diffusion (FD) ausgebildet ist, ladungsgekoppelt ist. Der Ausleseknoten 41 ist mit dem Gate eines als Source-Follower ausgebildeten Wandler-Feldeffekttransistors (FET) 43, der eine Ladungs-Spannungs-Wandlerschaltung darstellt, verbunden. Darüber hinaus ist der Ausleseknoten 41 über einen Rücksetz-FET 45 mit einer positiven Spannungsversorgung 51 verbunden. Einer der beiden Kanalanschlüsse des Wandler-FETs 43 ist ebenfalls mit der positiven Versorgung 51 verbunden, wohingegen der andere der beiden Kanalanschlüsse des Wandler-FETs 43 über einen Auswahl-FET 47, der als Zeilenauswahlschalter fungiert, mit einer dem dargestellten Pixel 11 zugeordneten Spaltenleitung 17 verbindbar ist.

Die Spaltenleitung 17 ist dafür vorgesehen, die in der zugehörigen Spalte angeordneten Pixel mit einer Spaltenausleseschaltung 13 zu verbinden. Die jeweilige Spaltenausleseschaltung 13 umfasst einen ersten Spaltenverstärker, insbesondere einen Differenzverstärker 31, und einen zweiten Spaltenverstärker, insbesondere einen Differenzverstärker 19, die parallel zueinander geschaltet sind. Einer einzigen jeweiligen Spaltenleitung 17 sind also zwei Spaltenverstärker (Differenzverstärker 31, 19) zugeordnet. Der Verstärkungsfaktor des ersten Differenzverstärkers 31 ist verstellbar. Die jeweilige Spaltenausleseschaltung 13 umfasst ferner erste Schalter 50, 49, Kondensatoren 33, 21 und zweite Schalter 24, 23.

Dem ersten Differenzverstärker 31 sind zwei zueinander parallel geschaltete Kondensatoren für Belichtungssignale 33-1, 33-2 vorgeschaltet, die über erste Schalter 50-1, 50-2 mit der Spaltenleitung 17 verbindbar sind. Darüber hinaus sind für die beiden Kondensatoren 33-1, 33-2 zweite Schalter 24-1, 24-2 vorgesehen. Die zwei Kondensatoren 33-1, 33-2 sind über die zweiten Schalter 24-1, 24-2 miteinander und gleichzeitig mit dem positiven Eingang 35 des ersten Verstärkers 31 verbindbar. Ferner ist dem ersten Verstärker 31 ein Kondensator für ein Referenzsignal 33-R vorgeschaltet, der über einen ersten Schalter 50-R mit der Spaltenleitung 17 verbindbar ist. Der negative Eingang 37 des ersten Verstärkers 31 ist mit dem Referenzsignalkondensator 33-R verbunden.

Dem zweiten Verstärker 19 sind vier parallel zueinander geschaltete Kondensatoren für Belichtungssignale 21-1, 21-2, 21-3, 21-4 vorgeschaltet, die über erste Schalter 49-1, 49-2, 49-3, 49-4 mit der Spaltenleitung 17 verbindbar sind. Darüber hinaus sind für die Kondensatoren 21-1, 21-2, 21-3, 21-4 zweite Schalter 23-1, 23-2, 23-3, 23-4 vorgesehen. Die vier Kondensatoren 21-1, 21-2, 21-3, 21-4 sind über die zweiten Schalter 23-1, 23-2, 23-3, 23-4 miteinander und gleichzeitig mit dem positiven Eingang 25 des zweiten Verstärkers 19 verbindbar. Ferner ist dem zweiten Verstärker 19 ein Kondensator für ein Referenzsignal 21-R vorgeschaltet, der über einen ersten Schalter 49-R mit der Spaltenleitung 17 verbindbar ist. Der negative Eingang 29 des zweiten Verstärkers 19 ist mit dem Referenzsignalkondensator 21 R verbunden.

Die beiden Kondensatoren 33-1, 33-2 besitzen dieselbe Kapazität, beispielsweise jeweils 0,5 pF. Die vier Kondensatoren 21-1, 21-2, 21-3, 21-4 besitzen ebenfalls dieselbe Kapazität, beispielsweise jeweils 0,25 pF. Die Summe der Kapazitäten der Kondensatoren 33-1, 33-2 entspricht daher der Summe der Kapazitäten der Kondensatoren 21-1, 21-2, 21-3, 21-4. Die beiden Referenzsignalkondensatoren 33-R, 21-R besitzen jeweils eine Kapazität, die der Summe der Kapazitäten der dem ersten Verstärker 31 zugeordneten Kondensatoren für Belichtungssignale 33 bzw. der Summe der Kapazitäten der dem zweiten Verstärker 19 zugeordneten Kondensatoren für Belichtungssignale 21 entspricht, beispielsweise 1 pF.

Außerdem umfasst der Bildsensor eine Steuereinrichtung 53, die das Transfer-Gate 39 (über eine Steuerleitung TRF), den Rücksetz-FET 45 (über eine Steuerleitung RES), den Auswahl-FET 47 (über eine Steuerleitung SEL), die ersten Schalter 50, 49 (über die Steuerleitungen S1 bis S8), die zweiten Schalter 24, 23 (über die Steuerleitung S9) und den Verstärkungsfaktor des ersten Verstärkers 31 (über die Steuerleitung Gain) steuert.

Der erste Verstärker 31 bildet (gemeinsam mit den zugeordneten Kondensatoren und Schaltern) einen ersten Kanal A. Der zweite Verstärker 19 bildet (gemeinsam mit den zugeordneten Kondensatoren und Schaltern) einen zweiten Kanal B.

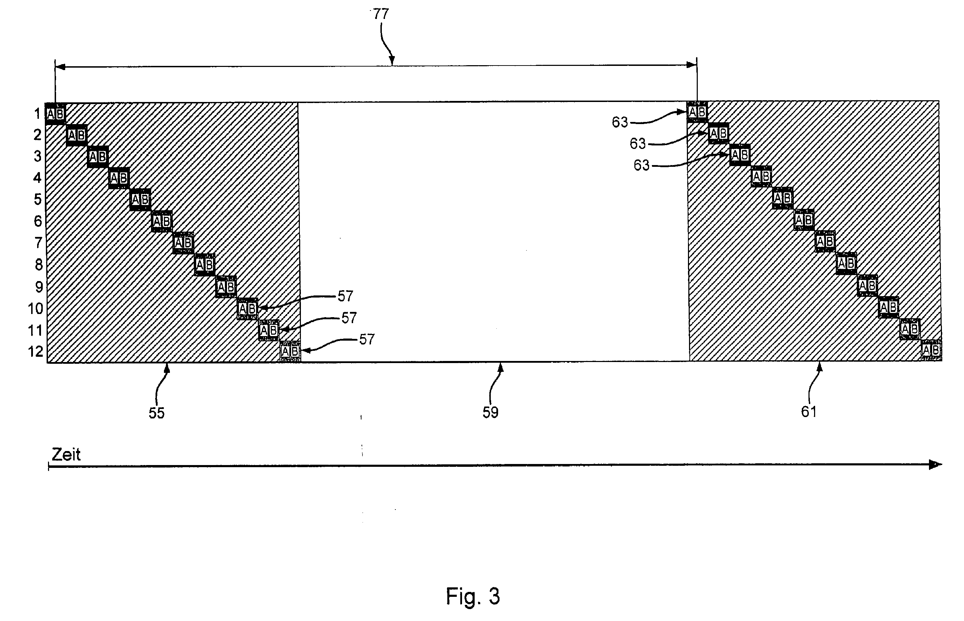

In den Fig. 3 bis 5 sind Zeitablaufdiagramme für das Auslesen eines Bilds in den verschiedenen Betriebsmodi des Bildsensors dargestellt. Unter einem Auslesen ist insbesondere das Auslesen der in den Pixeln 11 vorhandenen Ladungen in die den Verstärkern 31, 19 vorgeschalteten Kondensatoren 33, 21 zu verstehen. Unter einem Austakten ist die Übergabe der an den Verstärkern 31, 19 anliegenden Signale an eine den Verstärkern 31, 19 nachgeordnete Einheit, insbesondere nachgeordnete Datenausgänge, zu verstehen. Insbesondere ist das Austakten Bestandteil des Auslesens. In den Zeitablaufdiagrammen sind stellvertretend für sämtliche Zeilen des Bildsensors lediglich 12 Zeilen dargestellt.

Vor dem Auslesen erfolgt in jedem der verschiedenen Betriebsmodi zunächst ein Reset 55 (wie es nachfolgend im Zusammenhang mit einem Reset 5 des Normalmodus beschrieben ist), dessen Dauer für sämtliche Zeilen insgesamt beispielsweise 4 ms beträgt, wobei der Reset zeilensequentiell, d.h. Zeile für Zeile durchgeführt wird. Die Zeitdauer für den Reset ist analog zu der Zeitdauer des Auslesens 61 gewählt (s.u.). Die Zeitdauer für den anteiligen Reset 57 einer Zeile beträgt dann beispielsweise 1,8 µs. Der Reset findet statt, um Ladung aus der Pinned-Diode 15 und dem Ausleseknoten 41 vollständig zu entfernen. Der Pixel 11 ist damit "leer" und ein Belichtungsvorgang kann beginnen.

In dem Normalmodus gemäß Fig. 3 findet nach einer Wartezeit 59 von beispielsweise 6 ms, d.h. am Ende einer Belichtungszeit 77 von insgesamt 10 ms, ein (normales) Auslesen 61 statt, dessen Dauer insgesamt 4 ms beträgt. Während der Wartezeit 59 erfolgt für keines der Pixel ein Auslesen von Signalen (fehlende Schraffur in Fig. 3). Die Zeitdauer für das Auslesen 61 hängt - bei vorgegebener Anzahl an Datenausgängen und vorgegebener Anzahl an Zeilen - von der (maximalen) Auslesetaktfrequenz ab (wie vorstehend erläutert wurde). Die Zeitdauer für das anteilige Auslesen 63 einer Zeile darf dann beispielsweise maximal ca. 1,8 µs betragen. In dieser Zeit werden die Signale der Pixel 11 der jeweiligen Zeile an die Verstärker 31, 19 der Spaltenausleseschaltung 13 angelegt (wie es nachfolgend noch beschrieben ist). Das Auslesen erfolgt wiederum zeilensequentiell (d.h. Zeile für Zeile), um für alle Zeilen dieselbe Belichtungszeit zu gewährleisten. In Abhängigkeit von der erwünschten Belichtungszeit und Bildwiederholfrequenz kann nach dem in Fig. 3 gezeigten Auslesen 61 unmittelbar anschließend oder erst nach Ablauf eines Pauseintervalls ein weiterer Belichtungsvorgang erfolgen. In jedem Falle wird der nächste Belichtungsvorgang durch ein neuerliches "Leeren" der Pixel 11 eingeleitet. Dies kann innerhalb des in Fig. 3 gezeigten Auslesens 61 oder durch einen späteren, separaten Reset 55 geschehen.

Am Ende des anteiligen Auslesens 63 der jeweiligen Zeile werden die an den Verstärkern 31, 19 der Spaltenausleseschaltungen 13 anliegenden Signale der Zeile dann ausgetaktet. Hierbei steuert die Steuereinrichtung 53 die Steuerleitungen derart, dass die beiden Verstärker 31, 19 der jeweiligen Spaltenausleseschaltung 13 das Signal eines Pixels 11 einer Zeile mit zwei unterschiedlichen Verstärkungsfaktoren verstärken, wobei der Verstärkungsfaktor des ersten Verstärkers 31 größer ist (HIGH Gain) als der Verstärkungsfaktor des zweiten Verstärkers 19 (LOW Gain). Der erste Verstärker 31 (Kanal A) besitzt eine hohe Verstärkung für eine geringe Belichtung, der zweite Verstärker 19 (Kanal B) besitzt eine normale Verstärkung für eine normale und hohe Belichtung. Das in Fig. 3 dargestellte anteilige Auslesen 63 einer jeweiligen Zeile umfasst das Auslesen der beiden Kanäle A und B.

Hierin besteht eine erste Betriebsart des Bildsensors, in der ein jedes Pixel 11 2-kanalig ausgelesen wird, d.h. für jedes Pixel 11 werden der Kanal A und der Kanal B verwendet. Um die jeweilige Zeile vollständig auszutakten (d.h. insgesamt 2880 Pixel), sind insgesamt 90 Auslesetakte erforderlich. Pro Auslesetakt werden 32 Pixel ausgetaktet, wobei die beiden Kanäle A und B parallel ausgetaktet werden.

Nachfolgend wird der Auslesevorgang eines Bilds in dem Normalmodus des Bildsensors exemplarisch basierend auf einer 3.3V-CMOS-Technologie beschrieben, wobei die in der Pinned-Diode 15 erzeugte und am Ende eines Belichtungsvorgangs oder nach einem Belichtungsvorgang vorhandene Ladung in vier Ausleseschritten bzw. mehreren Portionen von dem Pixel 11 ausgelesen wird.

Am Ende eines Belichtungsvorgangs oder nach einem Belichtungsvorgang ist die Pinned-Diode 15 mit Ladung gefüllt. Der Ausleseknoten 41 kann ebenfalls eine geringe Menge an "unerwünschter" Ladung enthalten, die dort durch Leckströme und/oder Streulicht erzeugt wurde. Zum Auslesen wird daher zunächst an die Steuerleitung RES kurzzeitig eine Spannung von 3,3 V angelegt. Dadurch kann die unerwünschte, in dem Ausleseknoten 41 während des Belichtungsvorgangs ggf. erzeugte Ladung aus dem Ausleseknoten 41 zu der positiven Versorgungsspannung 51 abfließen (Reset 1). Hierdurch wird sichergestellt, dass der Ausleseknoten 41 vor einem ersten Ausleseschritt, wie er unmittelbar nachstehend näher beschrieben ist, nicht bereits Ladung enthält.

Dann wird mittels eines ersten Transfer-Steuersignals an die Steuerleitung TRF kurzzeitig eine Spannung von 2,5 V angelegt, so dass ein erster Teil der in der Pinned-Diode 15 erzeugten Ladung in den Ausleseknoten 41 fließen kann (Transfer 1).

Danach wird die Steuerleitung SEL auf eine Spannung von 3,3 V gelegt und der erste Schalter 49-1 wird geschlossen. Dadurch wird der Spannungspegel, der durch die im Ausleseknoten 41 vorhandene Ladung über den Wandler-FET 43 erzeugt wird, über den Auswahl-FET 47 auf die Spaltenleitung 17 geschaltet und somit zu dem Kondensator 21-1 geführt (Lesen Signal 1). Nachdem das System eingeschwungen ist, wird der Kondensator 21-1 durch Öffnen des ersten Schalters 49-1 wieder von dem Pixel 11 getrennt, so dass in dem Kondensator 21-1 in Form einer entsprechenden Ladung letztlich ein analoges erstes Teilwert-Spannungssignal gespeichert ist, das der nach dem ersten Ladungstransfer in dem Ausleseknoten 41 vorhandenen Ladung proportional ist.

Anschließend werden die vorstehend erläuterten Schritte "Reset 1", "Transfer 1" und "Lesen Signal 1" ein zweites Mal (Reset 2, Transfer 2, Lesen Signal 2) und ein drittes Mal (Reset 3, Transfer 3, Lesen Signal 3) durchgeführt, um weitere Ladungsportionen aus der Pinned-Diode 15 auszulesen und den ausgelesenen Ladungsportionen entsprechende Teilwert-Spannungssignale in den weiteren Kondensatoren 21-2, 21-3 zu speichern, wobei hierfür anstelle des ersten Schalters 21-1 der erste Schalter 21-2 bzw. 21-3 verwendet wird. Für den zweiten Ladungstransfer wird an die Steuerleitung TRF eine Spannung von 2,7 V angelegt, für den dritten Ladungstransfer eine Spannung von 2,9 V.

Danach wird die Steuerleitung RES kurzzeitig auf eine Spannung von 3,3 V gelegt, so dass die Ladung aus dem Ausleseknoten 41 zur positiven Versorgung 51 abfließen kann (Reset 4). Hierdurch wird sichergestellt, dass der Ausleseknoten 41 vor der Erzeugung eines Referenzwert-Spannungssignals, wie es nachstehend beschrieben wird, nicht bereits Ladung enthält.

Anschließend werden - nun ohne neuerliches Anlegen eines Transfer-Steuersignals an die Steuerleitung TRF - die ersten Schalter 50-R, 49-R geschlossen. Dadurch wird der Spannungspegel des Ausleseknotens 41 über den Wandler-FET 43 und den Auswahl-FET 47 auf die Spaltenleitung 17 geschaltet und somit zu den Referenzsignalkondensatoren 33-R, 21-R geführt (Lesen Referenz). Nachdem das System eingeschwungen ist, werden die Referenzwertkondensatoren 33-R, 21-R durch Öffnen der ersten Schalter 50-R, 49-R wieder von dem Pixel 11 getrennt.

In einem nächsten Schritt wird mittels eines vierten Transfer-Steuersignals die Steuerleitung TRF kurzzeitig auf die volle Spannung von 3,3 V gelegt. Dadurch kann der gesamte Rest der in der Pinned-Diode 15 erzeugten Ladung in den Ausleseknoten 41 fließen (Transfer 4).

Danach werden die ersten Schalter 50-1, 50-2, 49-4 geschlossen. Dadurch wird der durch den vierten Ladungstransfer bewirkte Spannungspegel des Ausleseknotens 41 über den Wandler-FET 43 und den Auswahl-FET 47 auf die Spaltenleitung 17 geschaltet und somit sowohl zu den Kondensatoren 33-1, 33-2 als auch zu dem Kondensator 21-4 geführt. Nachdem das System eingeschwungen ist, werden die Kondensatoren 33-1, 33-2, 21-4 durch Öffnen der ersten Schalter 50-1, 50-2, 49-4 wieder von dem Pixel 11 getrennt, so dass in den Kondensatoren 33-1, 33-2, 21-4 jeweils ein analoges viertes Teilwert-Spannungssignal gespeichert ist, das der nach dem vierten Ladungstransfer in dem Ausleseknoten 41 vorhandenen Ladung proportional ist.

Danach wird die Steuerleitung SEL wieder auf 0 V gelegt. Die Steuerleitungen RES und TRF werden auf eine Spannung von 3,3 V gelegt. Dadurch wird (werden) die in dem Ausleseknoten 41 befindliche Ladung (und eventuelle Restladungen, die sich in der Pinned-Diode 15 befinden) entfernt. Anschließend werden die Steuerleitungen RES und TRF wieder auf 0 V gelegt (Reset 5). Das Pixel ist wieder "leer" und der nächste Belichtungsvorgang kann beginnen.

Schließlich werden sämtliche zweiten Schalter 24, 23 geschlossen. Die Ausgangsspannungen, die nun von den Verstärkern 31, 19 erzeugt werden, werden zu einem gemeinsamen Analog/ Digital-Wandler oder zu getrennten Analog/Digital-Wandlern geführt und dort digitalisiert. Durch Subtrahieren des Referenzwert-Spannungssignals, d.h. des Spannungssignals des leeren Ausleseknotens 41, von dem Gesamtwert-Spannungssignal (an dem zweiten Verstärker 19) bzw. von dem Teilwert-Spannungssignal des vierten Ladungstransfers (an dem ersten Verstärker 31) wird ein geringes Rauschen erreicht, da die Ladungsunsicherheit (kTC-Rauschen) des Ausleseknotens 41 sowie alle Offset-Spannungen abgezogen werden.

Wird die Pinned-Diode 15 durch den jeweiligen Belichtungsvorgang nur gering gefüllt, werden bei den ersten drei Ausleseschritten keine Ladungen von der Pinned-Diode 15 an den Ausleseknoten 41 übertragen. Die drei Kondensatoren 21-1, 21-2, 21-3 enthalten somit jeweils das Teilwert-Spannungssignal des "leeren" Ausleseknotens 41, d.h. das Referenzwert-Spannungssignal, das auch in dem Referenzwertkondensator 21-R gespeichert ist. Die Spannung am Ausgang des zweiten Verstärkers 19 (Kanal B) beträgt daher genau einen Bruchteil in Höhe von einem Viertel der Spannung am Ausgang des ersten Verstärkers 31 (Kanal A). In diesem Fall wird zur Bestimmung der in der Pinned-Diode 15 erzeugten Ladung die Spannung am Ausgang des ersten Verstärkers 31 verwendet und die Spannung am Ausgang des zweiten Verstärkers 19 wird ignoriert.

Ist die Pinned-Diode stärker gefüllt, werden bei zumindest zwei, insbesondere bei allen vier Ausleseschritten Ladungen von der Pinned-Diode 15 an den Ausleseknoten 41 übertragen. Die Kondensatoren 21-3, 21-4 bzw. 21-2, 21-3, 21-4 bzw. 21-1, 21-2, 21-3, 21-4 enthalten somit die entsprechenden Teilwert-Spannungssignale des jeweils zumindest teilweise gefüllten Ausleseknotens 41. Die Spannung am Ausgang des ersten Verstärkers 31 ist in diesem Fall ungültig und wird ignoriert, da sie nicht die gesamte in der Pinned-Diode 15 erzeugte Ladung repräsentiert. Zur Bestimmung der in der Pinned-Diode 15 erzeugten Ladung wird in diesem Fall folglich nur die Spannung am Ausgang des zweiten Verstärkers 19 verwendet. In einem Übergangsbereich können auch beide Signale berücksichtigt werden (vgl. Fig. 1b).

Durch das Auslesen des Bildsensors in mehreren Ausleseschritten kann die Dynamik des Bildsensors um einen Faktor, der der Anzahl der Ausleseschritte entspricht, gegenüber einem lediglich einen Ausleseschritt umfassenden Auslesevorgang erhöht werden.

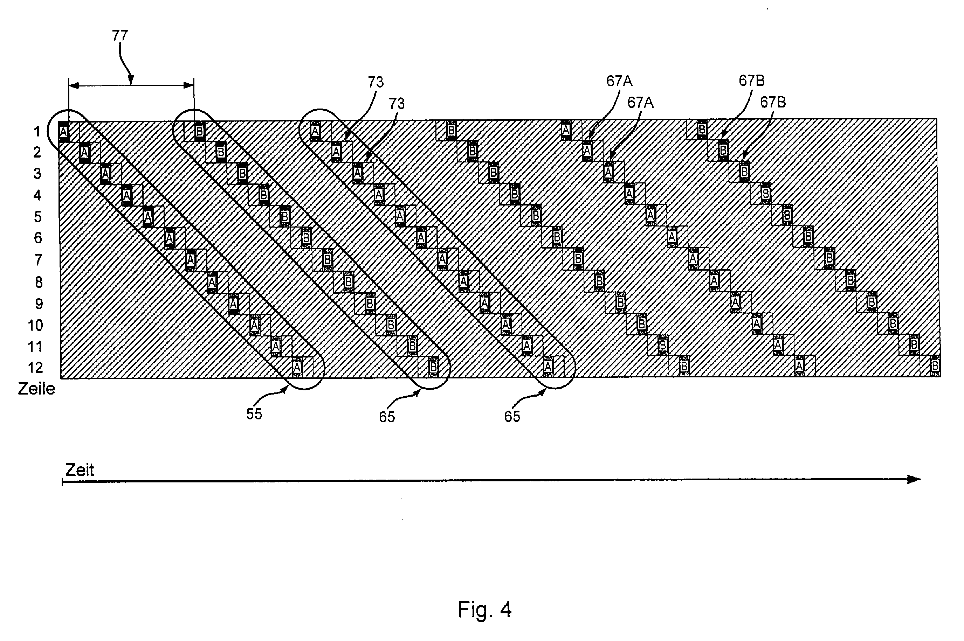

In dem Hochgeschwindigkeitsmodus gemäß Fig. 4 wird für ein erstmaliges schnelles Auslesen 65 eines Bilds zunächst wiederum ein Reset 55 durchgeführt (s.o.). Danach beginnt der erste Belichtungsvorgang, wobei die Belichtungszeit 77 (pro Zeile) beispielsweise lediglich 2 ms beträgt. Am Ende des Belichtungsvorgangs, d.h. nach der Belichtungszeit 77 von jeweils 2 ms, werden die Signale der Pixel 11 der jeweiligen Zeile ausgelesen, wobei das Signal eines jeden Pixels 11 an lediglich einen der beiden Verstärker 31, 19 der jeweiligen Spaltenausleseschaltung 13 angelegt wird. Das Auslesen 65 erfolgt für die verschiedenen Zeilen wiederum sequentiell, wobei das anteilige schnelle Auslesen 67A bzw. 67B für eine Zeile nun bereits in 0,9 µs abgeschlossen ist. Insgesamt dauert das Auslesen 65 in dem in Fig. 4 gezeigten Beispiel wiederum 4 ms. In Fig. 4 sind insgesamt fünf Auslesungen 65 dargestellt, wobei am Ende eines jeden Auslesens 65 unmittelbar ein Reset erfolgt ("Leeren" der Pixel 11), so dass im Anschluss an ein jeweiliges Auslesen 65 sofort der nächste Belichtungsvorgang beginnt. In dem Hochgeschwindigkeitsmodus werden ständig Signale ausgelesen (durchgehende Schraffur in Fig. 4).

Um das schnelle Auslesen 65 eines Bilds durchzuführen, wird zunächst das Signal eines Pixels 11 einer Zeile der jeweiligen Spalte (beispielsweise Zeile 1) an den einen Verstärker 19 oder 31 einer Spaltenausleseschaltung 13 durchgeschaltet und unmittelbar danach das Signal eines anderen Pixels 11 einer anderen Zeile der jeweiligen Spalte (beispielsweise Zeile 7) an den anderen Verstärker 31 bzw. 19 dieser Spaltenausleseschaltung 13. Die beiden Kanäle A und B einer jeden Spalte werden somit für verschiedene Zeilen verwendet. Die beiden Verstärker 31, 19 besitzen im Hochgeschwindigkeitsmodus denselben Verstärkungsfaktor, nämlich den normalen Verstärkungsfaktor des zweiten Verstärkers 31 aus dem Normalmodus. Die beiden an den Ausgängen der beiden Verstärker 31, 19 anliegenden Signale zweier Pixel 11 zweier unterschiedlicher Zeilen werden dann mit einem einzigen Auslesetakt parallel ausgetaktet. Damit werden pro Auslesetakt zwei Pixel 11 verschiedener Zeilen jeweils 1-kanalig ausgetaktet, und insgesamt werden die Pixel 11 eines jeden Bilds 1-kanalig ausgelesen.

Hierbei handelt es sich um eine zweite Betriebsart der jeweiligen Spaltenausleseschaltung 13. Um die jeweiligen beiden Zeilen vollständig auszutakten (d.h. insgesamt 2 x 2880 Pixel) sind insgesamt 90 Auslesetakte erforderlich, d.h. in den 90 Auslesetakten werden doppelt so viele Zeilen ausgetaktet wie in der ersten Betriebsart (Normalmodus). Pro Auslesetakt werden also 64 Pixel ausgetaktet. Die Dauer der für zwei Zeilen benötigten 90 Auslesetakte ist in Fig. 4 durch einen jeweiligen Rahmen 73 illustriert. Innerhalb dieser Dauer 73 erfolgt für eine Zeile ein anteiliges schnelles Auslesen 67A mittels der Kanäle A und für eine andere Zeile ein anteiliges schnelles Auslesen 67B mittels der Kanäle B.

Insbesondere kann ein Spannungssignal, das der während der Belichtungszeit 77 in dem Pixel 11 der jeweiligen Zeile erzeugten Ladung proportional ist, in den beiden Kondensatoren 33-1, 33-2 des jeweiligen Kanals A gespeichert werden. Da in dem Hochgeschwindigkeitsmodus die Pixel 11 einer jeweiligen Zeile nur 1-kanalig ausgelesen werden, steht der zweite Verstärker 19 für die Spannungssignale der Pixel 11 einer anderen Zeile zur Verfügung, die jeweils in den vier Kondensatoren 21-1, 21-2, 21-3, 21-4 des jeweiligen Kanals B gespeichert werden. Hierdurch kann die Auslesegeschwindigkeit für ein Bild erhöht werden.

Grundsätzlich ist es mit der vorliegenden Anordnung jedoch auch möglich, zur Erhöhung der Dynamik die während der Belichtungszeit 77 in dem Pixel 11 der jeweiligen Zeile erzeugte Ladung in zwei Ausleseschritten bzw. zwei Portionen auszulesen (vgl. Normalmodus). Die erste Teilladung eines Pixels 11 einer Zeile wird dann in dem Kondensator 33-1 gespeichert, die zweite Teilladung in dem Kondensator 33-2, und die erste Teilladung eines Pixels 11 einer anderen Zeile wird jeweils in den beiden Kondensatoren 21-1, 21-2 gespeichert, die zweite Teilladung jeweils in den Kondensatoren 21-3, 21-4. Auch in diesem Fall umfasst der Auslesevorgang für ein jeweiliges Pixel 11 lediglich einen Auslesetakt. Durch entsprechende Steuerung der Spannung auf der Steuerleitung TRF wird sichergestellt, dass lediglich der jeweilige letzte Ausleseschritt ein vollständiges Auslesen der in dem jeweiligen Pixel 11 vorhandenen Ladung ermöglicht (vgl. Normalmodus).

Die Zuordnung der Zeilen zu den beiden Verstärkern 31, 19 für einen jeweiligen Auslesetakt ist bei dem in Fig. 4 gezeigten Ausführungsbeispiel derart gewählt, dass das Auslesen zweier aufeinander folgender Bilder zeitlich überlappt. In Fig. 4 wird z.B. die Zeile 8 eines ersten Bilds und die Zeile 2 eines zweiten Bilds, die Zeile 9 des ersten Bilds und die Zeile 3 des zweiten Bilds, die Zeile 10 des ersten Bilds und die Zeile 4 des zweiten Bilds, etc. jeweils gemeinsam ausgetaktet. Dies ist jedoch nicht zwingend erforderlich. Zwei aufeinander folgende Bilder können stattdessen in dem Hochgeschwindigkeitsmodus rein sequentiell (d.h. nicht überlappend) ausgelesen werden, wobei das jeweilige schnelle Auslesen 65 abweichend von der Darstellung in Fig. 4 auch bei halbierter Dauer erfolgen kann. In diesem Fall erfolgt innerhalb eines Bildes das anteilige schnelle Auslesen 67A bzw. 67B der verschiedenen Zeilen unmittelbar nacheinander, was in Fig. 4 einer steileren "Treppe" entspricht, bei der sämtliche anteiligen schnellen Auslesungen 67A bzw. 67B eines Bildes - in welcher Reihenfolge auch immer - unmittelbar aufeinander folgen.

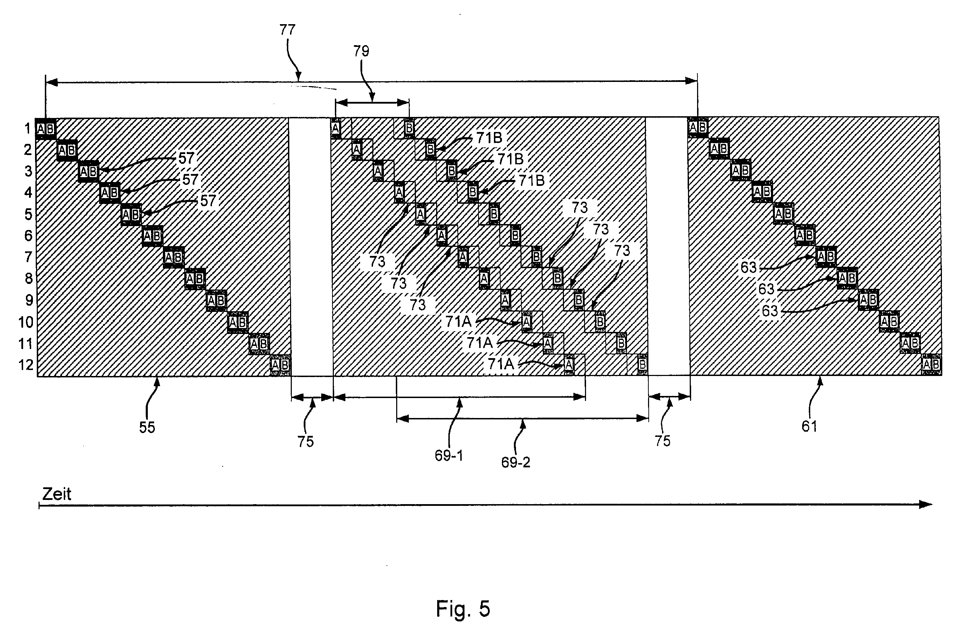

Bei dem Hochdynamikmodus gemäß Fig. 5 handelt es sich um einen Modus, der eine Mischform aus der ersten Betriebsart des Bildsensors und der zweiten Betriebsart des Bildsensors, d.h. aus dem Normalmodus und dem Hochgeschwindigkeitsmodus darstellt. Auch in dem Hochdynamikmodus gemäß Fig. 5 erfolgt zu Beginn des ersten Belichtungsvorgangs zunächst ein Reset 55 (s.o.). Anschließend erfolgt während des andauernden Belichtungsvorganges ein erstes und ein zweites schnelles partielles Zwischenauslesen 69-1, 69-2 (ähnlich dem Hochgeschwindigkeitsmodus gemäß Fig. 4), wobei das erste und das zweite Zwischenauslesen 69-1, 69-2 (für jede Zeile, d.h. für die beiden anteiligen schnellen partiellen Zwischenauslesungen 71A und 71B) einen Zeitversatz 79 von beispielsweise 0,5 ms zueinander aufweisen, so dass sich eine Gesamtdauer für das zweimalige Zwischenauslesen von 4,5 ms ergibt (Beginn von 69-1 bis Ende von 69-2). Am Ende des Belichtungsvorganges erfolgt ein normales Auslesen 61 (entsprechend dem Normalmodus gemäß Fig. 3). Zwischen dem Reset-Block 55 und dem Zwischenauslesen-Block 69 sowie zwischen dem Zwischenauslesen-Block 69 und dem Normalauslesen-Block 61 liegt jeweils eine Wartezeit 75 mit einer Dauer von beispielsweise 0,75 ms. Die Belichtungszeit 77 beträgt wiederum 10 ms.

Das erste Zwischenauslesen 69-1 und das zweite Zwischenauslesen 69-2 finden in der zweiten Betriebsart des Bildsensors statt, das normale Auslesen 61 in der ersten Betriebsart des Bildsensors, wobei das erste Zwischenauslesen 69-1 und das zweite Zwischenauslesen 69-2 einander zeitlich überlappen. Der Auslesevorgang für ein jeweiliges Pixel 11 umfasst insgesamt drei Auslesetakte, d.h. die beim ersten Zwischenauslesen 69-1 an dem jeweiligen Verstärker 31 oder 19 anliegenden Signale, die beim zweiten Zwischenauslesen 69-2 an dem jeweiligen Verstärker 31 oder 19 anliegenden Signale und die beim normalen Auslesen 61 an den beiden Verstärkern 31, 19 anliegenden Signale werden jeweils ausgetaktet.

Während das erste Zwischenauslesen 69-1 und das zweite Zwischenauslesen 69-2 überlappen, wird (wie in dem Hochgeschwindigkeitsmodus) die doppelte Anzahl von Zeilen ausgetaktet wie beim normalen Auslesen 61 am Ende des Belichtungsvorgangs. Entsprechend Fig. 4 ist die Dauer der für zwei Zeilen benötigten 90 Auslesetakte in Fig. 5 durch einen jeweiligen Rahmen 73 illustriert. Innerhalb dieser Dauer 73 erfolgt für eine Zeile ein anteiliges schnelles partielles Zwischenauslesen 71A mittels der Kanäle A und für eine andere Zeile ein anteiliges schnelles partielles Zwischenauslesen 71B mittels der Kanäle B. Während des Zwischenauslesens 69 werden die Pixel 11 einer jeweiligen Zeile nur 1-kanalig ausgelesen. Die beiden Verstärker 19, 31 bzw. die beiden Kanäle A, B einer jeden Spaltenausleseschaltung 13 stehen somit für unterschiedliche Zeilen zur Verfügung. Das erste Zwischenauslesen 69-1 und das zweite Zwischenauslesen 69-2 finden mitten während der andauernden Belichtung für ein Bild statt. Aus den zu den drei verschiedenen Zeitpunkten ausgetakteten Signalen für ein jeweiliges Pixel 11 wird dann ein einziger Auslesewert ermittelt, der die in dem jeweiligen Pixel 11 während eines einzigen Belichtungsvorgangs erzeugte Ladung repräsentiert. Hierin unterscheidet sich der Hochdynamikmodus von dem Normalmodus, bei dem die erläuterten einzelnen Ladungstransfers erst am Ende des Belichtungsvorganges oder nach dem Belichtungsvorgang durchgeführt werden.

Auch bei den Zwischenauslesungen 69-1, 69-2 kann die in dem Pixel 11 der jeweiligen Zeile erzeugte Ladung in zwei Ausleseschritten bzw. zwei Portionen ausgelesen werden. Anders als das schnelle Zwischenauslesen 65 im Hochgeschwindigkeitsmodus erfolgt das erste Zwischenauslesen 69-1 und das zweite Zwischenauslesen 69-2 im Hochdynamikmodus jedoch derart, dass bei dem jeweiligen Zwischenauslesen 69-1, 69-2 kein vollständiges Auslesen der in dem jeweiligen Pixel 11 vorhandenen Ladung stattfindet. Erfolgt das erste und/oder zweite Zwischenauslesen 69-1, 69-2 wie vorstehend erläutert in zwei Ausleseschritten (entsprechend dem Normalmodus gemäß Fig. 3), wird für die beiden Ausleseschritte vorzugsweise dieselbe Spannung an das das Transfer-Gate 39 angelegt, d.h. das Transfer-Gate 39 ist für beide Ausleseschritte gleich weit geöffnet.

Darüber hinaus unterscheidet sich das normale Auslesen 61 des Hochdynamikmodus von dem normalen Auslesen 61 des Normalmodus gemäß Fig. 3 dadurch, dass nur ein einziger Ausleseschritt durchgeführt wird, mit dem die in dem jeweiligen Pixel 11 zu diesem Zeitpunkt vorhandene Ladung vollständig ausgelesen wird. Allerdings erfolgt auch bei dem Hochdynamikmodus das normale Auslesen 61 2-kanalig, nämlich mit unterschiedlichen Verstärkungsfaktoren.

Durch das zweimalige Zwischenauslesen kann die von dem jeweiligen Pixel 11 während eines einzigen Belichtungsvorgangs insgesamt auslesbare Ladungsmenge und damit die Dynamik des Bildsensors deutlich erhöht werden. Der Hochdynamikmodus benötigt längere minimale Belichtungszeiten als der Normalmodus.

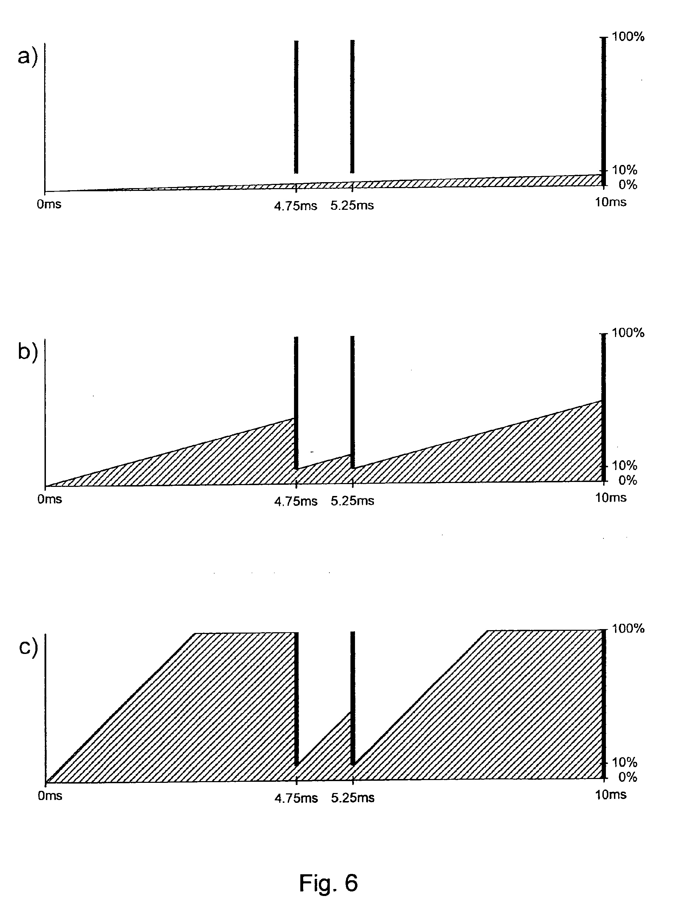

In Fig. 6 sind die drei vorgenannten Auslesungen, d.h. die beiden Zwischenauslesungen 69-1, 69-2 und das normale Auslesen 61, für eine Zeile eines Pixels 11 in Zusammenhang mit dem zeitlichen Verlauf der in der Pinned-Diode 15 über eine einzige Belichtung hinweg vorhandenen Ladung dargestellt. Zum Zeitpunkt 0 ms erfolgt ein Reset. Zum Zeitpunkt 4,75 ms wird das Pixel 11 ein erstes Mal partiell zwischenausgelesen. Zum Zeitpunkt 5,25 ms wird das Pixel 11 ein zweites Mal partiell zwischenausgelesen. Zum Zeitpunkt 10 ms wird das Pixel 11 normal, d.h. vollständig ausgelesen.

Auf der Ordinate ist die in der Pinned-Diode 15 vorhandene Ladung aufgetragen. Bei 100% ist die Sättigungsgrenze der Pinned-Diode 15 erreicht. Bei jedem Auslesen bzw. bei jedem daran anschließenden Auslesetakt wird das Transfer-Gate 39 temporär geöffnet, um zu ermöglichen, dass Ladung aus der Pinned-Diode 15 in den Ausleseknoten 41 übertragen werden kann.

Bei dem normalen Auslesen 61 bei 10 ms wird das Transfer-Gate 39 vollständig geöffnet, so dass die gesamte zu diesem Zeitpunkt in der Pinned-Diode 15 befindliche Ladung in den Ausleseknoten 41 transferiert werden kann. Die vollständige Öffnung des Transfer-Gates 39 bei 10 ms wird in Fig. 6 durch einen senkrechten Balken veranschaulicht, der sich über die gesamte Ordinatenachse erstreckt, d.h. über den gesamten Bereich von 0% bis 100%.

Zu den Auslese-Zeitpunkten 4,75 ms und 5,25 ms hingegen wird das Transfer-Gate 39 nicht vollständig, sondern nur teilweise geöffnet, d.h. es wird keine Ladung in den Ausleseknoten 41 übertragen, wenn die Pinned-Diode 15 zu dem jeweiligen Zeitpunkt nur sehr wenig Ladung enthält. In dem gewählten Beispiel kann nur derjenige Anteil der in der Pinned-Diode 15 aktuell enthaltenen Ladung übertragen werden, der einen Füllgrad der Pinned-Diode 15 von 10% übersteigt. Dies wird zu den Zeitpunkten 4,75 ms und 5,25 ms jeweils durch einen senkrechten Balken veranschaulicht, der sich lediglich über den Bereich von 10% bis 100% der Ordinatenachse erstreckt. Enthält die Pinned-Diode 15 beispielsweise 40% der maximal möglichen Ladung, werden bei einem Auslesen mit nur teilweiser Öffnung des Transfer-Gates 39 lediglich 30% der maximal möglichen Ladung übertragen.

Da bei den beiden Zwischenauslesungen zu den Zeitpunkten 4,75 ms und 5,25 ms nur Ladung übertragen wird, wenn die Pinned-Diode 15 zu mehr als 10% gefüllt ist, kann allein anhand des letzten Auslesens zum Zeitpunkt 10 ms (normales Auslesen) erkannt werden, ob bei den zuvor erfolgten Zwischenauslesungen Ladung übertragen wurde. Wurde erkannt, dass bei den beiden Zwischenauslesungen zu den Zeitpunkten 4,75 ms und 5,25 ms keine Ladung übertragen wurde, können die beim Austakten erhaltenen Ausleseergebnisse dieser beiden Auslesungen bei der Bestimmung eines Auslesewert für die während der fortlaufenden Ladungserzeugung in einem einzigen Belichtungsvorgang in dem jeweiligen Pixel 11 erzeugte Ladung ignoriert werden. Da damit letztlich nur eine einzige Auslesung ausgewertet wird, kann eine Erhöhung des thermischen Rauschens, das ansonsten mit der Wurzel der Anzahl der ausgewerteten Auslesungen steigt, bei geringer Belichtung vermieden werden.

Bei geringer Belichtung wird während des Belichtungsvorgangs in der Pinned-Diode 15 nur sehr wenig Ladung erzeugt, wie es in Fig. 6a dargestellt ist. Der Zeitraum des Belichtungsvorgangs, der der Bestimmung des vorgenannten Auslesewert zugrunde gelegt wird, entspricht dem Zeitraum von 0 ms bis 10 ms.

Bei mittlerer Belichtung (Fig. 6b) werden bei allen drei Auslesungen Ladungen transferiert und keines der entsprechenden Ausleseergebnisse ist übersteuert. In diesem Fall werden alle Ausleseergebnisse zur Bestimmung des vorgenannten Auslesewert verwendet, d.h. die gesamte in der Pinned-Diode Detektorelement 15 erzeugte Ladung wird ausgelesen und trägt zur Erzeugung der Ausleseergebnisse bei. Insbesondere wird hierzu die Summe der drei Ausleseergebnisse berechnet. Der Zeitraum des Belichtungsvorgangs, der der Bestimmung des vorgenannten Auslesewerts zugrunde gelegt wird, entspricht dem Zeitraum von 0 ms bis 10 ms.

Bei relativ hoher Belichtung (Fig. 6c) ist das Ausleseergebnis zumindest der dritten Auslesung bei 10 ms übersteuert. Das Ausleseergebnis der zweiten Auslesung bei 5,25 ms ist jedoch nicht übersteuert. Da durch die erste Auslesung bei 4,75 ms die zu diesem Zeitpunkt in der Pinned-Diode 15 vorhandene Ladung bis auf 10% Ladung gelöscht wurde, muss die Ladungsmenge, die beim zweiten Auslesen vorhanden ist und 10% Ladung übersteigt, zwangsläufig in den 0,5 ms zwischen der ersten Auslesung und der zweiten Auslesung entstanden sein. Durch die deutlich verkürzte effektive Belichtungszeit (von 10 ms auf 0,5 ms) kann eine wesentlich höhere Belichtung ausgewertet werden. Eine Übersteuerung tritt erst bei ca. 2.000% Helligkeit auf.

Der Zeitraum des Belichtungsvorgangs, der der Bestimmung des vorgenannten Auslesewerts zugrunde gelegt wird, d.h. die effektive Belichtungszeit, beträgt also entweder 10 ms (Fig. 6a, b) oder 0,5 ms (Fig. 6c). Für beide Zeiträume liegt der Zeitmittelpunkt jeweils bei 5 ms. Da sich der Zeitmittelpunkt der effektiven Belichtungszeit beim Übergang von einer Situation gemäß den Fig. 6a, b auf eine Situation gemäß Fig. 6c nicht verändert, treten bei bewegten Motiven lediglich unterschiedliche Bewegungsunschärfen, jedoch keine unterschiedlichen Positionen im Bild auf.

Im Hochdynamikmodus liegen pro Pixel bzw. Pixelsignal vier separate Ausleseergebnisse vor, nämlich ein erstes Zwischenausleseergebnis (des ersten schnellen partiellen Zwischenauslesens 69-1) mit normaler Verstärkung, ein zweites Zwischenausleseergebnis (des zweiten schnellen partiellen Zwischenauslesens 69-2) mit normaler Verstärkung, ein drittes abschließendes Ausleseergebnis (des normalen Auslesens 61) mit normaler Verstärkung (über den zweiten Verstärker 31 bzw. Kanal B) und ein viertes abschließendes Ausleseergebnis (des normalen Auslesens 61) mit hoher Verstärkung (über den ersten Verstärker 19 bzw. Kanal A). In dem Fall gemäß Fig. 6a wird das vierte Ausleseergebnis (hohe Verstärkung) als Ausgabewert für das jeweilige zugrunde liegende Pixelsignal verwendet. In dem Fall gemäß Fig. 6b wird als Ausgabewert ein Auslesewert verwendet, der wie vorstehend erläutert aus den beiden Zwischenausleseergebnissen und dem dritten Ausleseergebnis (normale Verstärkung) ermittelt wird. In dem Fall gemäß Fig. 6c wird das zweite Zwischenausleseergebnis als Ausgabewert verwendet.

Durch die vorliegende Erfindung kann ein Bildsensor in mehreren Betriebsmodi betrieben werden. Wird eine hohe Bildwiederholrate verlangt, kann der Bildsensor (bei gegenüber dem Normalmodus reduziertem Dynamikumfang) in dem Hochgeschwindigkeitsmodus betrieben werden. Wird eine hohe Dynamik verlangt, kann der Bildsensor (bei gegenüber dem Normalmodus längerer minimaler Belichtungszeit) in dem Hochdynamikmodus betrieben werden.

### Bezugszeichenliste

- 11: Pixel
- 13: Spaltenausleseschaltung
- 15: Pinned-Diode
- 17: Spaltenleitung
- 19: zweiter Spaltenverstärker
- 21: Kondensator
- 23: zweiter Schalter
- 24: zweiter Schalter
- 25: positiver Eingang
- 29: negativer Eingang
- 31: erster Spaltenverstärker
- 33: Kondensator
- 35: positiver Eingang
- 37: negativer Eingang
- 39: Transfer-Gate
- 41: Ausleseknoten
- 43: Wandler-FET
- 45: Rücksetz-FET
- 47: Auswahl-FET
- 49: erster Schalter
- 50: erster Schalter
- 51: positive Versorgung
- 53: Steuereinrichtung
- 55: Reset
- 57: anteiliger Reset
- 59: Wartezeit
- 61: normales Auslesen
- 63: anteiliges normales Auslesen
- 65: schnelles Auslesen
- 67A, 67B: anteiliges schnelles Auslesen
- 69: schnelles partielles Zwischenauslesen
- 71A, 71B: anteiliges schnelles partielles Zwischenauslesen
- 73: Dauer der für zwei Zeilen benötigten Auslesetakte
- 75: Wartezeit
- 77: Belichtungszeit
- 79: Zeitversatz
- 101: Kanal
- 103: Kanal
- 105: Ausgabewert
- 107: Sprung
- 109: Übergangsbereich

## Patentansprüche

1. Bildsensor, insbesondere CMOS-Bildsensor, für elektronische Kameras, mit einer Vielzahl von in Zeilen und Spalten angeordneten lichtempfindlichen Pixeln (11) zur Erzeugung von belichtungsproportionalen Signalen, wobei die Pixel (11) einer jeweiligen Spalte über wenigstens eine jeweilige Spaltenleitung (17) mit wenigstens einer jeweiligen Spaltenausleseschaltung (13) gekoppelt sind, und wobei die jeweilige Spaltenausleseschaltung (13) wenigstens zwei parallel geschaltete Spaltenverstärker (31, 19) umfasst, und mit einer Steuereinrichtung (53) zum Steuern des Auslesens eines Bilds, wobei ein Auslesevorgang für ein jeweiliges Pixel (11) wenigstens einen Auslesetakt umfasst,
**dadurch gekennzeichnet,**
**dass** der Verstärkungsfaktor wenigstens eines (31) der beiden Spaltenverstärker (31, 19) der jeweiligen Spaltenausleseschaltung (13) verstellbar ist, und
**dass** der Bildsensor eine erste Betriebsart und eine zweite Betriebsart umfasst,
wobei in der ersten Betriebsart für einen jeweiligen Auslesetakt die beiden Spaltenverstärker (31, 19) unterschiedliche Verstärkungsfaktoren aufweisen und das Signal eines Pixels (11) einer Zeile mit den zwei unterschiedlichen Verstärkungsfaktoren verstärkt wird, und wobei in der zweiten Betriebsart für einen jeweiligen Auslesetakt die beiden Spaltenverstärker (31, 19) denselben Verstärkungsfaktor
aufweisen und die Signale zweier Pixel (11) zweier unterschiedlicher Zeilen mit demselben Verstärkungsfaktor verstärkt werden.

2. Bildsensor nach Anspruch 1,
dadurchgekennzeichnet,
dass der Bildsensor wenigstens zwei der folgenden Betriebmodi umfasst:
einen Normalmodus, in dem der Bildsensor ausschließlich in der ersten Betriebsart betrieben wird,
einen Hochgeschwindigkeitsmodus, in dem der Bildsensor ausschließlich in der zweiten Betriebsart betrieben wird, und
einen Hochdynamikmodus, in dem der Bildsensor zunächst in der zweiten Betriebsart und anschließend in der ersten Betriebsart betrieben wird.

3. Bildsensor nach Anspruch 2,
**dadurch gekennzeichnet,**
**dass** der Auslesevorgang für ein jeweiliges Pixel (11) in dem Normalmodus und/oder dem Hochgeschwindigkeitsmodus einen einzigen Auslesetakt umfasst, und/oder in dem Hochdynamikmodus mehrere Auslesetakte.

4. Bildsensor nach Anspruch 3,
dadurchgekennzeichnet,
dass der Hochdynamikmodus wenigstens zwei Auslesetakte in der zweiten Betriebsart und/oder lediglich einen Auslesetakt in der ersten Betriebsart umfasst, und/oder
dass in dem Hochdynamikmodus lediglich ein letzter Auslesetakt, in dem bevorzugt der Bildsensor in der ersten Betriebsart betrieben wird, ein vollständiges Auslesen der in dem Pixel (11) vorhandenen Ladung ermöglicht, wobei bevorzugt der letzte Auslesetakt lediglich einen Ausleseschritt umfasst.

5. Bildsensor nach zumindest einem der vorstehenden Ansprüche,
**dadurch gekennzeichnet,**
**dass** die Spaltenausleseschaltung (13) mehrere Signalspeicher (33, 21) für Belichtungssignale umfasst, wobei dem ersten der beiden Spaltenverstärker (31) wenigstens ein Signalspeicher (33) für Belichtungssignale, insbesondere wenigstens zwei Signalspeicher für Belichtungssignale, und dem zweiten der beiden Spaltenverstärker (19) wenigstens zwei Signalspeicher (21) für Belichtungssignale, insbesondere wenigstens vier Signalspeicher für Belichtungssignale, vorgeschaltet sind, wobei bevorzugt die wenigstens zwei oder wenigstens vier Signalspeicher (33, 21) für Belichtungssignale parallel zueinander geschaltet sind.

6. Bildsensor nach Anspruch 5,
**dadurch gekennzeichnet,**
**dass** die Kapazität des bzw. die Summe der Kapazitäten der dem ersten Spaltenverstärker (31) vorgeschalteten Signalspeicher (33) für Belichtungssignale der Summe der Kapazitäten der dem zweiten Spaltenverstärker (19) vorgeschalteten Signalspeicher (31) für Belichtungssignale entspricht, und/oder
**dass** die dem ersten Spaltenverstärker (31) zugeordneten Signalspeicher (33) für Belichtungssignale jeweils dieselbe Kapazität und/oder die dem zweiten Spaltenverstärker (19) zugeordneten Signalspeicher (21) für Belichtungssignale jeweils dieselbe Kapazität aufweisen.

7. Bildsensor nach Anspruch 5 oder 6,
**dadurch gekennzeichnet,**
**dass** den beiden Spaltenverstärkern (31, 19) wenigstens ein Signalspeicher (33-R, 21-R) für ein Referenzsignal, insbesondere jedem der beiden Spaltenverstärker (31, 19) ein eigener Referenzsignalspeicher (33-R, 21-R), vorgeschaltet ist, wobei bevorzugt die Kapazität des jeweiligen Referenzsignalspeichers (33-R, 21-R) der Summe der Kapazitäten der dem ersten Spaltenverstärker (31) vorgeschalteten Signalspeicher (33) für Belichtungssignale bzw. der Summe der Kapazitäten der dem zweiten Spaltenverstärker (19) vorgeschalteten Signalspeicher (21) für Belichtungssignale entspricht.

8. Bildsensor nach zumindest einem der Ansprüche 5 bis 7,
**dadurch gekennzeichnet,**
**dass** die Spaltenausleseschaltung (13) erste Schaltermittel (50, 49) umfasst, um die jeweilige Spaltenleitung (17) wahlweise mit einem oder mehreren der Signalspeicher (33, 33-R, 21, 21-R) zu verbinden, und/oder
**dass** die Spaltenausleseschaltung (13) zweite Schaltermittel (24, 23) umfasst, um die dem ersten Spaltenverstärker (31) und/oder dem zweiten Spaltenverstärker (19) zugeordneten Signalspeicher (33, 21) für Belichtungssignale jeweils gemeinsam mit dem zugeordneten Spaltenverstärker (31, 19) zu verbinden.

9. Bildsensor nach zumindest einem der Ansprüche 5 bis 8,
**dadurch gekennzeichnet,**
**dass** die Steuereinrichtung (53) dazu ausgelegt ist, die für den jeweiligen Auslesetakt in dem Pixel (11) erzeugte Ladung in mehreren Ausleseschritten und damit mehreren Portionen von dem Pixel (11) auszulesen, um den einzelnen Ladungsportionen proportionale Teilwert-Messsignale in den dem ersten oder dem zweiten Spaltenverstärker (31, 19) vorgeschalteten Signalspeichern (33, 21) für Belichtungssignale getrennt voneinander zu speichern.

10. Bildsensor nach Anspruch 9,
**dadurch gekennzeichnet,**
**dass** in einem Normalmodus der Auslesevorgang für ein jeweiliges Pixel (11) einen einzigen Auslesetakt umfasst und die Steuereinrichtung (53) dazu ausgelegt ist, die den einzelnen Ladungsportionen proportionalen Teilwert-Messsignale in den dem zweiten Spaltenverstärker (19) vorgeschalteten Signalspeichern (21) getrennt voneinander zu speichern, und das dem letzten Ausleseschritt zugehörige Teilwert-Messsignal zusätzlich in dem oder den dem ersten Spaltenverstärker (31) vorgeschalteten einen oder wenigstens zwei Signalspeichern (33) zu speichern;
und/oder
**dass** in einem Hochdynamikmodus lediglich in der zweiten Betriebsart mehrere Ausleseschritte erfolgen.

11. Bildsensor nach zumindest einem der Ansprüche 9 oder 10,
**dadurch gekennzeichnet,**
**dass** in einem Normalmodus und/oder einem Hochgeschwindigkeitsmodus lediglich der letzte Ausleseschritt ein vollständiges Auslesen der in dem Pixel (11) vorhandenen Ladung ermöglicht; und/oder
**dass** die Anzahl der dem zweiten Spaltenverstärker (19) vorgeschalteten Signalspeicher für Belichtungssignale (21) der Anzahl der Ausleseschritte entspricht.

12. Bildsensor nach zumindest einem der Ansprüche 5 bis 11,
**dadurch gekennzeichnet,**
**dass** in einem Hochdynamikmodus der Auslesevorgang für ein jeweiliges Pixel (11) mehrere Auslesetakte umfasst, wobei der oder die vor dem letzten Auslesetakt liegenden Auslesetakte während des Belichtungsvorgangs für das Bild erfolgen, und wobei die Steuereinrichtung (53) dazu ausgelegt ist, die für den jeweiligen Auslesetakt in dem Pixel (11) erzeugte Ladung, ggf. in mehreren Ausleseschritten und damit mehreren Portionen, von dem Pixel (11) auszulesen, um ein der Ladung proportionales Messsignal in dem oder den dem ersten Spaltenverstärker (31) vorgeschalteten einen oder wenigstens zwei Signalspeichern (33) für Belichtungssignale oder in den dem zweiten Spaltenverstärker (19) vorgeschalteten Signalspeichern (21) für Belichtungssignale zu speichern.

13. Bildsensor nach Anspruch 12,
dadurchgekennzeichnet,
dass die Anzahl der Auslesetakte ungeradzahlig ist und/oder wenigstens ein Paar oder ein jeweiliges Paar von vor dem letzten Auslesetakt liegenden Auslesetakten symmetrisch um den Zeitmittelpunkt eines jeweiligen Belichtungsvorgangs verteilt ist.

14. Bildsensor nach zumindest einem der vorstehenden Ansprüche, **dadurch gekennzeichnet,**
**dass** die Steuereinrichtung (53) dazu ausgelegt ist, einen an das Pixel (11) angelegten Steuerpuls zu variieren, um wahlweise ein teilweises oder vollständiges Auslesen der in dem Pixel (11) vorhandenen Ladung zu ermöglichen;
und/oder
**dass** die Steuereinrichtung (53) dazu ausgelegt ist, in der zweiten Betriebsart zwei Bilder zeitlich überlappend und/ oder die Signale der Pixel (11) zweier unterschiedlicher Zeilen verschiedener Bilder auszutakten;
und/oder
**dass** die zwei unterschiedlichen, in der zweiten Betriebsart den mit einem jeweiligen Auslesetakt zu verstärkenden beiden Pixeln (11) zugeordneten Zeilen nicht unmittelbar aufeinander folgen und/oder einen konstanten Zeilenabstand voneinander aufweisen.

15. Verfahren zum Auslesen eines Bildsensors, insbesondere eines CMOS-Bildsensors, für elektronische Kameras, wobei der Bildsensor eine Vielzahl von in Zeilen und Spalten angeordneten lichtempfindlichen Pixeln zur Erzeugung von belichtungsproportionalen Signalen und eine Steuereinrichtung zum Steuern des Auslesens eines Bilds umfasst, wobei die Pixel einer jeweiligen Spalte über wenigstens eine jeweilige Spaltenleitung mit wenigstens einer jeweiligen Spaltenausleseschaltung gekoppelt sind, wobei die jeweilige Spaltenausleseschaltung wenigstens zwei parallel geschaltete Spaltenverstärker umfasst, wobei ein Auslesevorgang für das jeweilige Pixel wenigstens einen Auslesetakt umfasst, **dadurch gekennzeichnet,**
**dass** der Verstärkungsfaktor wenigstens eines der beiden Spaltenverstärker der jeweiligen Spaltenausleseschaltung verstellt wird und die jeweilige Spaltenausleseschaltung zwischen einer ersten Betriebsart und einer zweiten Betriebsart umgeschaltet wird, wobei in der ersten Betriebsart für einen jeweiligen Auslesetakt die beiden Spaltenverstärker unterschiedliche Verstärkungsfaktoren aufweisen und das Signal eines Pixels einer Zeile mit den zwei unterschiedlichen Verstärkungsfaktoren verstärkt wird, und wobei in der zweiten Betriebsart für einen jeweiligen Auslesetakt die beiden Spaltenverstärker denselben Verstärkungsfaktor aufweisen und die Signale zweier Pixel zweier unterschiedlicher Zeilen mit demselben Verstärkungsfaktor verstärkt werden.
